# EUROPÄISCHE PATENTSCHRIFT

(11) **EP 3 618 990 B1**
(45) Veröffentlichungstag und Bekanntmachung des Hinweises auf die Patenterteilung: **15.02.2023**
(21) Anmeldenummer: 18725119.4
(22) Anmeldetag: 02.05.2018
(51) Int. Cl.: B23B 51/06, B23C 5/28, B23D 77/00

(54) **ZERSPANUNGSWERKZEUG MIT KÜHLMITTELUMLENKUNG**
CUTTING TOOL HAVING COOLANT DEFLECTION
OUTIL D'USINAGE PAR ENLÈVEMENT DE COPEAUX COMPRENANT UNE DÉVIATION D'AGENT DE REFROIDISSEMENT

(30) Priorität: 02.05.2017 DE 102017109369
(43) Veröffentlichungstag der Anmeldung: 11.03.2020
(73) Patentinhaber: KOMET Deutschland GmbH, 74354 Besigheim (DE)
(72) Erfinder: LEUZE, Peter, 74399 Walheim (DE); SCHWARZ, Sigurd, 74354 Besigheim (DE); TRINKNER, Thomas, 74354 Besigheim (DE); VOGEL, Viktor, 74354 Besigheim (DE)
(74) Vertreter: Pfiz, Thomas
(86) Internationale Anmeldenummer: PCT/EP2018/061225
(87) Internationale Veröffentlichungsnummer: WO 2018/202726

(56) Entgegenhaltungen:
- EP-A1- 2 298 483
- WO-A1-01/58632
- WO-A1-2014/091748
- WO-A1-2014/186812
- JP-A- 2014 030 888

## Beschreibung

Die Erfindung betrifft ein Zerspanungswerkzeug, insbesondere Fräs-, Aufbohr- oder Reibwerkzeug, gemäß dem Oberbegriff des Patentanspruchs 1. Ein solches Zerspanungswerkzeug ist aus der EP 2 298 483 A1 bekannt.

Beim Planfräsen von komplexen Bauteilstrukturen, beispielsweise Motorblöcken, aus Aluminium, ist häufig problematisch, dass die erzeugten Späne gegen das Werkstück geschleudert werden und in Aussparungen des Bauteils verbleiben. Bei herkömmlichen Fräswerkzeugen wird er Kühlmittelstrahl direkt aus dem Werkzeugkopf gegen die Schneide gelenkt. Hat das Werkstück an der zu bearbeitenden Fläche Bohrungen oder eingegossene Kanäle, hat dies zur Folge, dass auch Späne in die Hohlräume gespült werden. Dies zieht einen hohen Reinigungsaufwand nach sich, da die Späne sich nur schlecht und meist nicht prozesssicher entfernen lassen. Die gefertigten Bauteile müssen einem aufwendigen Kontrollprozess auf verbleibende Restspäne unterzogen werden, wobei häufig Ausschuss aufwändig erzeugter Werkstücke in Kauf genommen werden muss.

Aus der JP 2914030888 A und der EP 2 298 483 A1 sind Schraubenköpfe bzw. Prallplatten zur bereichsweisen Abdeckung von Kühlmittelnuten bekannt, wobei aber nur kreisförmige Umfangskonturen offenbart werden.

Ausgehend hiervon liegt der Erfindung die Aufgabe zugrunde, die im Stand der Technik bekannten Zerspanungswerkzeuge zur Vermeidung der vorgenannten Nachteile weiter zu verbessern und eine von dem Werkstück weg gerichtete Spanabfuhr zur Erreichung einer hohen Fertigungsqualität zu unterstützen.

Zur Lösung dieser Aufgabe wird die Patentanspruch 1 angegebene Merkmalskombination vorgeschlagen. Vorteilhafte Ausgestaltungen und Weiterbildungen der Erfindung ergeben sich aus den abhängigen Ansprüchen.

Die Erfindung geht von dem Gedanken aus, mit einfachen Maßnahmen an der Werkzeugstirnseite eine Kühlmittelumlenkung zur Spanfreihaltung des Werkstücks zu erzielen. Dementsprechend wird erfindungsgemäß vorgeschlagen, dass die Prallscheibe durch einen Zahnring gebildet ist, dessen radial abstehende Zahnsegmente die Kühlmittelnuten überdecken. Die nach vorne offenen Kühlmittelnuten lassen sich somit einfach in die Stirnfläche des Werkzeugkopfs einarbeiten, während die abdeckende Prallscheibe dafür sorgt, dass der Kühlmittelstrahl nicht einfach frei austritt, sondern unter Aufprägung einer Rückwärtskomponente gezielt gegen die Schneide umgelenkt wird. Dadurch kann das auftreffende Kühlmittel bzw. der Kühlschmierstoff nicht nach vorne ausweichen, sondern wird unter Mitnahme der Späne nach hinten in den Spankanal abgeleitet.

Eine besonders bevorzugte Ausgestaltung sieht vor, dass die Kühlmittelnuten von der Austrittsöffnung zu der Mündungsöffnung hin entgegen der Rotationsrichtung des Werkzeugkopfs verlaufen. Damit wird verhindert, dass das Kühlmittel und die Späne radial abfliegen, sondern vielmehr gegen den Schneidkörper gedrängt werden.

Weitere Verbesserungen in dieser Hinsicht ergeben sich dadurch, dass die Kühlmittelnuten abweichend von einer Radialen schräg oder gekrümmt oder tangential verlaufen, und dass die Mündungsöffnung in einer Wand der Spannut ausgebildet ist und zu einer Schneidkante eines Schneidelements hin ausgerichtet ist.

Vorteilhafterweise begrenzt das Schneidelement eine von der Stirnseite weg nach hinten führende Spanabfuhrfläche, die den Spanfluss vom Werkstück abhält.

In diesem Zusammenhang ist es günstig, wenn die Spanabfuhrfläche bezüglich der Mittelachse positiv nach hinten geneigt ist, und wenn die Spanabfuhrfläche im Radialquerschnitt bezüglich der Mittelachse eine V-förmige oder konkav gekrümmte, vorzugsweise sich nach hinten abflachende Querschnittskontur aufweist.

Um die rückwärts gerichtete Spanabfuhr durch eine Sogwirkung bzw. einen Turbineneffekt zu unterstützen, ist es von Vorteil, wenn das Schneidelement und/oder die jeweilige Spannut einen sich nach hinten erweiternden Spanabfuhrtrichter begrenzen.

Auch herstellungstechnisch ist es von Vorteil, wenn die Prallscheibe aus einem Flachmaterialstück insbesondere durch eine Blechbearbeitungsmethode wie Wasserstrahl- oder Laserschneiden zugeschnitten ist.

Vorteilhafterweise weist das Kanalsystem eine Mehrzahl von jeweils zu einer Austrittsöffnung verlaufende, in den Werkzeugkopf eingebrachte Zuführbohrungen auf.

Günstig ist es auch, wenn die Zuführbohrungen von einem axial durch den Werkzeugkopf verlaufenden Zentralkanal abzweigen und von der Mittelachse weg schräg nach außen verlaufen.

Die erfindungsgemäßen Maßnahmen lassen sich besonders vorteilhaft bei einem Zerspanungswerkzeug realisieren, bei dem die Schneidelemente durch eine in einem jeweiligen umfangsseitigen Plattensitz des Werkzeugkopfs montierte Schneidplatte gebildet sind, wobei an dem Werkzeugkopf zwischen 4 und 50 Schneidelemente in Umfangsrichtung vorzugsweise gleichmäßig verteilt angeordnet sein können.

Für die Fluidführung ist es auch von Vorteil, wenn die Kühlmittelnuten eine Länge im Bereich von 1 bis 10 mm besitzen.

Für eine besonders günstige Kühlmittelzufuhr in der Nähe der Schneidelemente ist es vorteilhaft, wenn die Kühlmittelnuten vollständig in einem Randbereich der Stirnseite liegen, wobei sich der Randbereich zwischen dem 0,6- und 1,0-fachen und bevorzugt 0,7- bis 1,0-fachen des Radius der Stirnseite radial erstreckt.

Im Folgenden wird die Erfindung anhand der in der Zeichnung schematisch dargestellten Ausführungsbeispiele näher erläutert. Es zeigen:
- Fig. 1: ein Planfräswerkzeug mit einer abgebrochen gezeigten stirnseitigen Prallscheibe zur Kühlmittelumlenkung in perspektivischer Darstellung;
- Fig. 2: das Werkzeug nach Fig. 1 in axial geschnittener, abgebrochen perspektivischer Darstellung;
- Fig. 3: eine ausschnittsweise Vergrößerung des Werkzeugs nach Fig. 1.

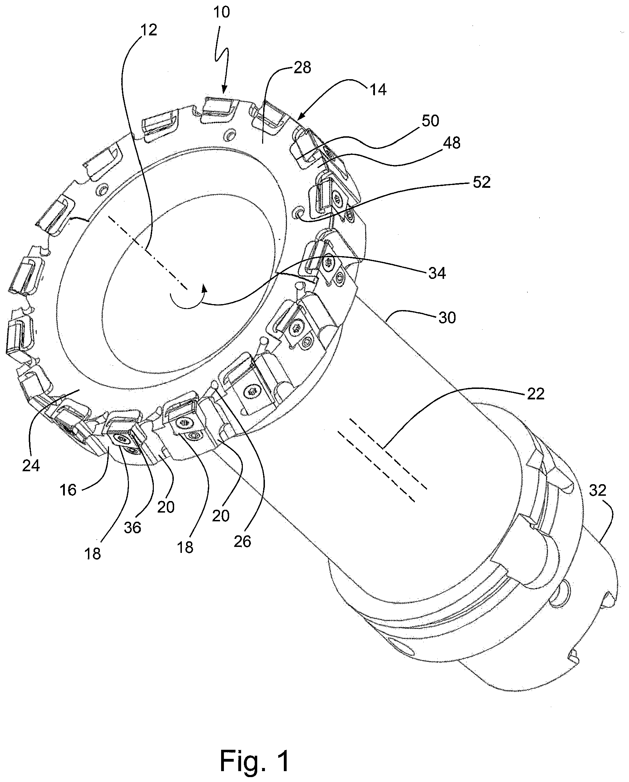

Das in der Zeichnung dargestellte Planfräswerkzeug 10 umfasst einen um seine Mittelachse 12 rotierbaren Werkzeugkopf 14, an dessen Umfangsfläche 16 eine Vielzahl von Schneidelementen 18 und zugeordneten Spannuten 20 und in dessen Innerem ein Kanalsystem 22 zur Kühlmittel- bzw. Kühlschmierstoffzuführung zu den Schneidelementen 18 ausgebildet ist. Dabei sorgen an der Stirnseite 24 des Werkzeugkopfs 14 eingebrachte Kühlmittelnuten 26 und eine die Kühlmittelnuten 26 abdeckende, in Fig. 1 nur etwa hälftig gezeigte stirnseitige Prallscheibe 28 für eine Kühlmittelumlenkung in die Spannuten 20 hinein.

Der Werkzeugkopf 14 ist an einem Schafteil 30 gehalten, an dessen hinterem Ende eine Schnittstelle 32 zur Kopplung mit einer Maschinenspindel angeordnet ist. Beim Planfräsen eines Werkstücks wird das Planfräswerkzeug 10 senkrecht zur Mittelachse 12 bewegt und in Richtung des Pfeils 34 rotiert, wobei die Schneidelemente 18 mit ihrer stirn- und umfangsseitig überstehenden Schneide 36 den Werkstoff spanend abtragen und die Späne mit Hilfe des nach hinten umgelenkten Kühlmittels gezielt durch die Spannuten 20 abgeführt werden, wie es weiter unten noch näher erläutert wird. Bei dem gezeigten Ausführungsbeispiel ist jedem der Schneidelemente 18 eine eigene Spannut 20 zugeordnet, wobei jedoch auch andere Konfigurationen beispielsweise mit zwei gegeneinander versetzten Schneidelementen pro Spannut denkbar sind.

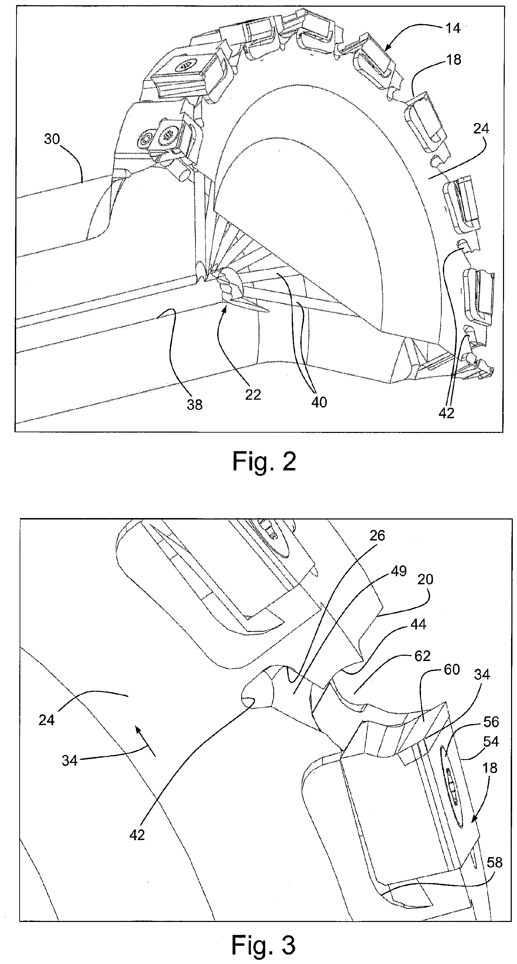

Fig. 2 veranschaulicht die Kühlmittelzuführung über das Kanalsystem 22 des Werkzeugkopfs 14. Die Einspeisung des Kühlmittels erfolgt maschinenseitig von der Schnittstelle 32 her über einen axial verlaufenden Zentralkanal 38. An dessen vorderem Ende zweigen eine Vielzahl von Zuführbohrungen 40 ab, die jeweils von der Mittelachse 12 weg schräg nach außen verlaufen und an einer Austrittsöffnung 42 nahe einer zugeordneten Spannut 20 im Bereich der Stirnseite 24 des Werkzeugkopfs 14 münden.

Wie am besten aus Fig. 3 zu ersehen, liegen die Austrittsöffnungen 42 jeweils am Boden einer Kühlmittelnut 26, die in einer Mündungsöffnung 44 im Bereich einer Wand 46 der Spannut 20 endet. Dabei ist die Mündungsöffnung 44 zu der Schneide 36 eines gegenüberliegenden Schneidelements 18 hin ausgerichtet. Die Kühlmittelnuten 26 verlaufen somit von der Austrittsöffnung zu der Mündungsöffnung 44 abweichend von einer Radialen entgegen der Rotationsrichtung 34 des Werkzeugkopfs 14, wobei der Kühlmittelfluss unter der Prallscheibe 28 in einem Radius zur Mittelachse 12 direkt stirnseitig auf die Schneide 36 erfolgt.

Zweckmäßig ist die Prallscheibe 28 durch einen kreisförmig geschlossenen Zahnring gebildet, dessen radial abstehende Zahnsegmente 48 die Längsöffnungen 49 der Kühlmittelnuten 26 überdecken, während im Bereich der Zahnlücken 50 die Schneidelemente 18 angeordnet sind (Fig. 1). Dabei kann die Prallscheibe 28 aus einem Blechzuschnitt insbesondere durch Wasserstrahlschneiden gebildet sein und an der Stirnseite 24 des Werkzeugkopfs 14 durch Verbindungsmittel 52 lösbar gehalten sein.

Wie aus Fig. 3 weiter ersichtlich, sind die Schneidelemente 18 als Schneidplatten 54 ausgebildet, die mittels Schraube 56 jeweils in einem umfangsseitigen Plattensitz 58 des Werkzeugkopfs 14 montiert sind. Sie begrenzen dabei eine von der Stirnseite 24 weg nach hinten führende Spanabfuhrfläche 60, die bezüglich der Mittelachse 12 - wie auch aus Fig. 1 erkennbar - positiv nach hinten und zur Mittelachse 12 hin geneigt ist.

Um die Spanabfuhr von dem Werkstück weg nach hinten zu optimieren, besitzt die Spanabfuhrfläche 60 im Radialquerschnitt bezüglich der Mittelachse eine V-förmige bzw. konkav gekrümmte, sich nach hinten abflachende Querschnittskontur. Dadurch wird ein sich nach hinten erweiternder Spanabfuhrtrichter 62 gebildet, der bei hohen Drehzahlen eine Art von Turbineneffekt erzeugt und durch den erzeugten Fluidstrom auch die Werkzeugkühlung verbessert.

## Patentansprüche

1. Zerspanungswerkzeug, insbesondere Fräs-, Aufbohr- oder Reibwerkzeug, mit einem um seine Mittelachse (12) rotierbaren, eine vordere Stirnseite (24) und eine Umfangsfläche (16) aufweisenden Werkzeugkopf (14), mehreren an der Umfangsfläche (16) im Umfangsrichtung verteilt angeordneten Schneidelementen (18) und zugeordneten Spannuten (20), und einem durch den Werkzeugkopf (14) hindurch verlaufenden Kanalsystem (22) zur Kühlmittelzuführung zu den Schneidelementen (18), wobei die Stirnseite (24) des Werkzeugkopfs (14) mit Kühlmittelnuten (26) versehen ist, die jeweils von einer Austrittsöffnung (42) des Kanalsystems (22) zu einer Mündungsöffnung (44) in einer Spannut (20) führen, und wobei Längsöffnungen (49) der Kühlmittelnuten (26) durch eine stirnseitig an dem Werkzeugkopf (14) fixierte Prallscheibe (28) abdeckt sind, **dadurch gekennzeichnet, dass** die Prallscheibe (28) durch einen Zahnring gebildet ist, dessen radial abstehende Zahnsegmente (48) die Kühlmittelnuten (26) überdecken.

2. Zerspanungswerkzeug nach Anspruch 1, **dadurch gekennzeichnet, dass** die Kühlmittelnuten (26) von der Austrittsöffnung (42) zu der Mündungsöffnung (44) hin entgegen der Rotationsrichtung (34) des Werkzeugkopfs (14) verlaufen.

3. Zerspanungswerkzeug nach Anspruch 1 oder 2, **dadurch gekennzeichnet, dass** die Kühlmittelnuten (26) abweichend von einer Radialen schräg oder gekrümmt oder tangential verlaufen.

4. Zerspanungswerkzeug nach einem der Ansprüche 1 bis 3, **dadurch gekennzeichnet, dass** die Mündungsöffnung (44) in einer Wand (46) der Spannut (20) ausgebildet ist und zu einer Schneidkante (36) eines Schneidelements (18) hin ausgerichtet ist.

5. Zerspanungswerkzeug nach einem der Ansprüche 1 bis 4, **dadurch gekennzeichnet, dass** das Schneidelement (18) eine von der Stirnseite (24) weg nach hinten führende Spanabfuhrfläche (60) begrenzt.

6. Zerspanungswerkzeug nach Anspruch 5, **dadurch gekennzeichnet, dass** die Spanabfuhrfläche (60) bezüglich der Mittelachse (12) positiv nach hinten geneigt ist.

7. Zerspanungswerkzeug nach Anspruch 5 oder 6, **dadurch gekennzeichnet, dass** die Spanabfuhrfläche (60) im Radialquerschnitt bezüglich der Mittelachse (12) eine V-förmige oder konkav gekrümmte, vorzugsweise sich nach hinten abflachende Querschnittskontur aufweist.

8. Zerspanungswerkzeug nach einem der Ansprüche 1 bis 7, **dadurch gekennzeichnet, dass** das Schneidelement (18) und/oder die jeweilige Spannut einen sich nach hinten erweiternden Spanabfuhrtrichter (62) begrenzen.

9. Zerspanungswerkzeug nach einem der Ansprüche 1 bis 8, **dadurch gekennzeichnet, dass** die Prallscheibe (28) aus einem Flachmaterialstück insbesondere durch eine Blechbearbeitungsmethode zugeschnitten ist.

10. Zerspanungswerkzeug nach einem der Ansprüche 1 bis 9, **dadurch gekennzeichnet, dass** das Kanalsystem (22) eine Mehrzahl von jeweils zu einer Austrittsöffnung (42) verlaufende, in den Werkzeugkopf (14) eingebrachte Zuführbohrungen (40) aufweist.

11. Zerspanungswerkzeug nach Anspruch 10, **dadurch gekennzeichnet, dass** die Zuführbohrungen (40) von einem axial durch den Werkzeugkopf (14) verlaufenden Zentralkanal (38) abzweigen und von der Mittelachse (12) weg schräg nach außen verlaufen.

12. Zerspanungswerkzeug nach einem der Ansprüche 1 bis 11, **dadurch gekennzeichnet, dass** die Schneidelemente (18) durch eine in einem jeweiligen umfangsseitigen Plattensitz (58) des Werkzeugkopfs (14) montierte Schneidplatte (54) gebildet sind.

13. Zerspanungswerkzeug nach einem der Ansprüche 1 bis 12, **dadurch gekennzeichnet, dass** an dem Werkzeugkopf (14) zwischen 4 und 50 Schneidelemente (18) in Umfangsrichtung vorzugsweise gleichmäßig verteilt angeordnet sind.

14. Zerspanungswerkzeug nach einem der Ansprüche 1 bis 13, **dadurch gekennzeichnet, dass** die Kühlmittelnuten (26) eine Länge im Bereich von 1 bis 10 mm besitzen.

15. Zerspanungswerkzeug nach einem der Ansprüche 1 bis 14, **dadurch gekennzeichnet, dass** die Kühlmittelnuten (26) vollständig in einem Randbereich der Stirnseite (24) liegen, wobei sich der Randbereich zwischen dem 0,6- und 1,0-fachen des Radius der Stirnseite radial erstreckt.

## Claims

1. A cutting tool, in particular a milling cutter, boring tool or reamer, comprising a tool head (14), which can rotate about its central axis (12) and comprises a front end face (24) and a circumferential surface (16), a plurality of cutting elements (18) and associated flutes (20) that are arranged on the circumferential surface (16) so as to be distributed in the circumferential direction, and a channel system (22), which runs through the tool head (14) and supplies coolant to the cutting elements (18), wherein the end face (24) of the tool head (14) is provided with coolant grooves (26), each of which leads from an outlet (42) of the channel system (22) to a mouth (44) in a flute (20), and wherein the longitudinal openings (49) in the coolant grooves (26) are covered by a baffle disk (28) that is fixed to the end face of the tool head (14), **characterized in that** the baffle disk (28) is formed by a toothed ring, the radially projecting toothed segments (48) of which cover the coolant grooves (26).

2. The cutting tool as per claim 1, **characterized in that** the coolant grooves (26) extend from the outlet (42) towards the mouth (44) counter to the direction of rotation (34) of the tool head (14).

3. The cutting tool as per either claim 1 or claim 2, **characterized in that** the coolant grooves (26) extend obliquely or in a curved manner or tangentially so as to deviate from a radial direction.

4. The cutting tool as per any one of claims 1 to 3, **characterized in that** the mouth (44) is made in a wall (46) of the flute (20) and is oriented towards a cutting edge (36) of a cutting element (18).

5. The cutting tool as per any one of claims 1 to 4, **characterized in that** the cutting element (18) delimits a chip removal surface (60) that leads backwards away from the end face (24).

6. The cutting tool as per claim 5, **characterized in that** the chip removal surface (60) is positively inclined towards the back with respect to the central axis (12).

7. The cutting tool as per either claim 5 or claim 6, **characterized in that** the radial cross section of the chip removal surface (60) has a V-shaped or concave cross sectional contour, preferably a cross sectional contour that flattens towards the back, with respect to the central axis (12).

8. The cutting tool as per any one of claims 1 to 7, **characterized in that** the cutting element (18) and/or the particular flute delimit a chip removal funnel (62) that gets wider towards the back.

9. The cutting tool as per any one of claims 1 to 8, **characterized in that** the baffle disk (28) is cut out from a piece of flat material, in particular by means of a sheet metal working method.

10. The cutting tool as per any one of claims 1 to 9, **characterized in that** the channel system (22) comprises a plurality of supply holes (40) made in the tool head (14), which each extend to an outlet (42).

11. The cutting tool as per claim 10, **characterized in that** the supply holes (40) branch off from a central channel (38) that extends axially through the tool head (14), and extend obliquely outwards away from the central axis (12).

12. The cutting tool as per any one of claims 1 to 11, **characterized in that** the cutting elements (18) are formed by a cutting plate (54) that is mounted on a particular circumferential plate seat (58) of the tool head (14).

13. The cutting tool as per any of claims 1 to 12, **characterized in that** between 4 and 50 cutting elements (18) are arranged on the tool head (14) so as to be preferably uniformly distributed in the circumferential direction.

14. The cutting tool as per any one of claims 1 to 13, **characterized in that** the coolant grooves (26) have a length in the range of from 1 to 10 mm.

15. The cutting tool as per any one of claims 1 to 14, **characterized in that** the coolant grooves (26) lie entirely in an edge region of the end face (24), the edge region extending radially by an amount that is equal to between 0.6 and 1.0 times the radius of the end face.

## Revendications

1. Outil d'usinage par enlèvement de copeaux, en particulier outil de fraisage, de perçage ou d'alésage, comportant une tête d'outil (14) pouvant être tournée autour de son axe central (12) et comportant une face frontale (24) avant et une surface circonférentielle (16), plusieurs éléments de coupe (18) répartis sur la surface circonférentielle (16) dans le sens circonférentiel et des rainures à copeaux (20) associées, et un système de canaux (22) s'étendant à travers la tête d'outil (14) destiné à l'acheminement de liquide de refroidissement aux éléments de coupe (18), dans lequel la face frontale (24) de la tête d'outil (14) est pourvue de rainures de liquide de refroidissement (26), lesquelles mènent respectivement depuis une ouverture de sortie (42) du système de canaux (22) à une ouverture d'embouchure (44) dans une rainure à copeaux (20), et dans lequel des ouvertures longitudinales (49) des rainures de liquide de refroidissement (26) sont recouvertes par une plaque déflectrice (28) fixée côté frontal sur la tête d'outil (14), **caractérisé en ce que** la plaque déflectrice (28) est formée par une couronne dentée dont des segments dentés (48) faisant saillie radialement recouvrent les rainures de liquide de refroidissement (26).

2. Outil d'usinage par enlèvement de copeaux selon la revendication 1, **caractérisé en ce que** les rainures de liquide de refroidissement (26) s'étendent depuis l'ouverture de sortie (42) jusqu'à l'ouverture d'embouchure (44) à l'opposé du sens de rotation (34) de la tête d'outil (14).

3. Outil d'usinage par enlèvement de copeaux selon la revendication 1 ou 2, **caractérisé en ce que** les rainures de liquide de refroidissement (26) s'étendent obliquement ou de manière courbée ou tangentiellement en s'écartant d'une ligne radiale.

4. Outil d'usinage par enlèvement de copeaux selon l'une quelconque des revendications 1 à 3, **caractérisé en ce que** l'ouverture d'embouchure (44) est réalisée dans une paroi (46) de la rainure à copeaux (20) et est orientée vers une arête de coupe (36) d'un élément de coupe (18).

5. Outil d'usinage par enlèvement de copeaux selon l'une quelconque des revendications 1 à 4, **caractérisé en ce que** l'élément de coupe (18) délimite une surface d'évacuation de copeaux (60) menant à l'écart de la face frontale (24) vers l'arrière.

6. Outil d'usinage par enlèvement de copeaux selon la revendication 5, **caractérisé en ce que** la surface d'évacuation de copeaux (60) est inclinée positivement vers l'arrière par rapport à l'axe central (12).

7. Outil d'usinage par enlèvement de copeaux selon la revendication 5 ou 6, **caractérisé en ce que** la surface d'enlèvement de copeaux (60) présente, dans une section transversale radiale, un contour de section transversale en forme de V ou courbé de manière concave, de préférence aplati vers l'arrière, par rapport à l'axe central (12).

8. Outil d'usinage par enlèvement de copeaux selon l'une quelconque des revendications 1 à 7, **caractérisé en ce que** l'élément de coupe (18) et/ou la rainure à copeaux respective délimitent un entonnoir d'évacuation de copeaux (62) s'élargissant vers l'arrière.

9. Outil d'usinage par enlèvement de copeaux selon l'une quelconque des revendications 1 à 8, **caractérisé en ce que** la plaque déflectrice (28) est découpée dans une pièce de matière plate, en particulier selon un procédé d'usinage de tôle.

10. Outil d'usinage par enlèvement de copeaux selon l'une quelconque des revendications 1 à 9, **caractérisé en ce que** le système de canaux (22) comporte une pluralité d'alésages d'alimentation (40), s'étendant respectivement vers une ouverture de sortie (42), introduits dans la tête d'outil (14).

11. Outil d'usinage par enlèvement de copeaux selon la revendication 10, **caractérisé en ce que** les alésages d'alimentation (40) partent d'un canal central (38) s'étendant axialement à travers la tête d'outil (14) et s'étendent obliquement vers l'extérieur en s'éloignant de l'axe central (12).

12. Outil d'usinage par enlèvement de copeaux selon l'une quelconque des revendications 1 à 11, **caractérisé en ce que** les éléments de coupe (18) sont formés par une plaquette de coupe (54) montée dans un siège de plaquette (58) respectif côté circonférence de la tête d'outil (14).

13. Outil d'usinage par enlèvement de copeaux selon l'une quelconque des revendications 1 à 12, **caractérisé en ce qu'**entre 4 et 50 éléments de coupe (18) sont répartis sur la tête d'outil (14) dans le sens circonférentiel, de préférence uniformément.

14. Outil d'usinage par enlèvement de copeaux selon l'une quelconque des revendications 1 à 13, **caractérisé en ce que** les rainures de liquide de refroidissement (26) présentent une longueur dans la plage comprise entre 1 et 10 mm.

15. Outil d'usinage par enlèvement de copeaux selon l'une quelconque des revendications 1 à 14, **caractérisé en ce que** les rainures de liquide de refroidissement (26) se trouvent complètement dans une zone de bord de la face frontale (24), dans lequel la zone de bord s'étend radialement entre 0,6 fois et 1,0 fois le rayon de la face frontale.
